# EUROPEAN PATENT APPLICATION

(11) **EP 3 318 445 A1**
(43) Date of publication of application: **09.05.2018**
(21) Application number: 16275161.4
(22) Date of filing: 08.11.2016
(51) Int. Cl.: B60N 2/68, A47C 7/42

(54) **SEAT RELEASE SYSTEM**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

The following invention relates to occupant recovery from an armoured land vehicle, and to a system for occupant recovery. There is provided a quick release seat system suitable for a vehicle, comprising a base element operably attached to a floor pan, said floor pan being rigidly affixed to the vehicle, a back element for supporting an occupant, wherein said base element and back element are rigidly affixed by at least one quick release mechanical clamp, such as to allow removal of said back element from the base element during an evacuation of the vehicle

## Description

The following invention relates to a seat release system for occupant recovery from an armoured land vehicle, and more particularly to a retrofitable quick release seat to aid occupant recovery.

Before the present invention is described in further detail, it is to be understood that the invention is not limited to the particular embodiments described, as such may, of course, vary. It is also to be understood that the terminology used herein is for the purpose of describing particular embodiments only, and is not intended to be limiting, since the scope of the present invention will be limited only by the appended claims.

According to a first aspect of the invention there is provided a quick release seat system suitable for a vehicle, comprising a base element operably attached to a floor pan, said floor pan being rigidly affixed to the vehicle, a back element for supporting an occupant, wherein said base element and back element are rigidly clamped by at least one quick release mechanical clamp, such as to allow removal of said back element from the base element during an evacuation of the vehicle.

The wherein said base element comprises a first structural member, and said back element comprises a second structural member, wherein said quick release mechanical clamp releasably clamps said first structural member and said second structural member.

The first and second structural members may be rigidly attached to the base and back elements, respectively. The structural members may be integral parts of the seat system or additional members securely fastened to the seat system

The seat element may comprise a support and with padded or resilient regions for comfort.

The floor pan, may be a mounting arrangement that is capable of accepting a seat element. The seat element may be slideably engaged with the floor pan to allow movement of the seat, or is may be rigidly fixed. In armoured vehicles the seat element and floor pan may be operably connected by a blast attenuation device, such as springs dampers pistons etc to reduce the shock impulse between the vehicle and the operative or occupant in the seat system.

The back element maybe a spine or frame work, with padded or resilient regions for comfort. In the case of armoured vehicles the framework may typically be formed from welded plates, forged, or cast and then further fitted with padded or resilient portions to form the rear support (back rest) of the seat system. The back element may be mechanically linked to the base element, such as via a T-Joint, or connection at the mechanism which controls the angle between the back element and the base element. In a conventional seat system, the base element and back element are secured together in a robust fashion to ensure the seat retains its integrity.

The degree of robustness of seat systems and including the connections between the base element and back element in an armoured vehicle are further increased due to the blast threats. Therefore, to retro-fit quick release system in an armoured vehicle seat system, the back element may need to be cut in more than one location, such that wherein the base element comprises at least two first structural members and the back element comprises at least two second structural members, wherein said at least two first structural members are each rigidly affixed to the base element, and said at least two second structural members are rigidly affixed to said back element, wherein at least two quick release mechanical clamps releasably clamp said at least two first structural members and said at least two second structural members; such that a first of the at least two quick release mechanical clamps is arranged to clamp a first arrangement of a first structural member and second structural member, and a second of the at least two quick release mechanical clamps is arranged to clamp a second arrangement of a first structural member and second structural member.

In a highly preferred arrangement, where there are at least two quick release mechanical clamps, the at least two quick release mechanical clamps may be rigidly connected by an elongate support, to provide torsional stiffness between the at least two clamps.

Occupant recovery from a commercial vehicle may be greatly facilitated by the use of hydraulic cutting devices to remove pillars, roof panels, doors seats and portions of seats such as the back elements/backrests of seats. In recovery from a commercial vehicle, there may also be many entry and exit points to further facilitate occupant recovery.

In an armoured vehicle, even after a hazard event, a significant proportion of the hull, cockpit and interior will be structurally intact, and the use of traditional hydraulic cutting tools may be ineffective or may take too long to recover an occupant from an armoured vehicle. The armoured vehicle may further be in a hostile environment and so the time frame of several hours to cut away panels, and indeed to cut through armoured support structures in seat systems, may not be possible, and may attract unwanted attention to the situation.

Armoured land vehicles often have limited access portals and doors, as the armoured vehicle is required to withstand severe forces, and so access may be restricted to one major access portal. Further, armoured land vehicles are often cramped and comprise at least one, typically a plurality of protruding features, such as for example, hardware and kit to carry out complex missions. Therefore entering and exiting the vehicle typically comprises manoeuvring via a labyrinthine or tortuous path to avoid the at least one, typically a plurality of protruding features, such as, for example over seats, storage boxes, equipment, further occupants. The protruding features may be rigidly affixed, such as, for example to the walls, roof and/or floor of the vehicle, so cannot be readily removed, during an emergency evacuation. Therefore the ability to quickly remove the back element of the seat, will remove one of the protruding features, and allow more facile removal of the occupant.

In a further arrangement the back element may be cut to provide the feature of removal, wherein the back element comprises a third structural member, wherein said third structural member is mounted to the back element, and a fourth structural member, wherein said fourth structural member is mounted to said seat element, wherein said quick release mechanical clamp releasably clamps said third structural member and said fourth structural member. This may result in a slight protrusion of any remaining fourth structural member. This arrangement may only require one quick release mechanical clamp.

According to a further aspect of the invention there is provided a quick release mechanical clamp, which comprises at least two clamping surfaces suitable for providing a releasable clamping engagement with said first and second structural members, a hinge member interconnecting a first clamping surface and a second clamping surface,
a clamp bar engaged with said first clamping surface and said second clamping surface, a release lever, wherein said release lever is releasably secured to a second clamping surface, a tensioner configured to apply tension to allow the clamp bar to releasably secure the first clamping surface and second clamping surface on the first and second members.

In a further arrangement the release lever is pivotally attached to the clamp bar, wherein said release lever comprises a cam arrangement, such that rotation of the release lever about the clamp bar moves from a first tensioned position which provides a releasable clamping engagement to a second reduced tension position, which allows quick release of the clamp bar from the engagement between said at least two clamping surfaces.

The first and/or second structural members of the base element may be operatively attached to further mechanisms of the seat system, such as for example the recline mechanism. The first and or second clamping surfaces may be substantially the same size as the first and second structural members, so as to provide an effective clamp. In a further arrangement, the quick release mechanical clamp and said first and/or second structural members may comprise one or more co-operative voids and lugs. The co-operative voids and lugs may be pins or elongate protrusions and cooperative holes or groove, which provide locking engagement and may prevent movement of the first and second clamping surfaces. The clamping action may be further improved such as, for example increasing the friction therebetween, such as for example, roughened surfaces, polymer fillers, may be used to increase the friction between the clamping surfaces and the first and/or second structural members.

The release lever may be temporarily secured to the at least one second clamping surface by a retaining pin such as a sprung pin or split pin, such that the leaver is stowed away, but can be readily activated and deployed by removal of a simple retaining means, such as the sprung pin.
According to a further aspect of the invention is a method of converting a conventional rigid seat system in an armoured land vehicle, to a quick release seat system, wherein said rigid seat systems comprises
a base element operably attached to a floor pan, said floor pan being rigidly affixed to the vehicle, a back element for supporting an occupant, wherein said base element and back element are rigidly affixed by at least one quick release mechanical clamp, as defined herein comprising the steps of
cutting the conventional rigid seat system at at least one location, to provide a severed seat system, to allow the removal of the back element from the base element,
re-attaching said severed seat system with the at least one quick release mechanical clamp.

According to a yet further aspect of the invention there is provided a method of removing an occupant to be extracted from an armoured land vehicle comprising a quick release seat system as defined herein, comprising the steps of:
operating the quick release seat system suitable for a vehicle, as claimed in any one of the preceding claims,
removing the occupant from an access point of the armoured land vehicle.

An embodiment of the invention will now be described by way of example only and with reference to the accompanying drawings of which:-
Figure 1 shows a rear view of a representation of a seat
Figure 2 shows a rear view of a seat system with quick release clamp.
Figures 3a-c show a quick release clamp

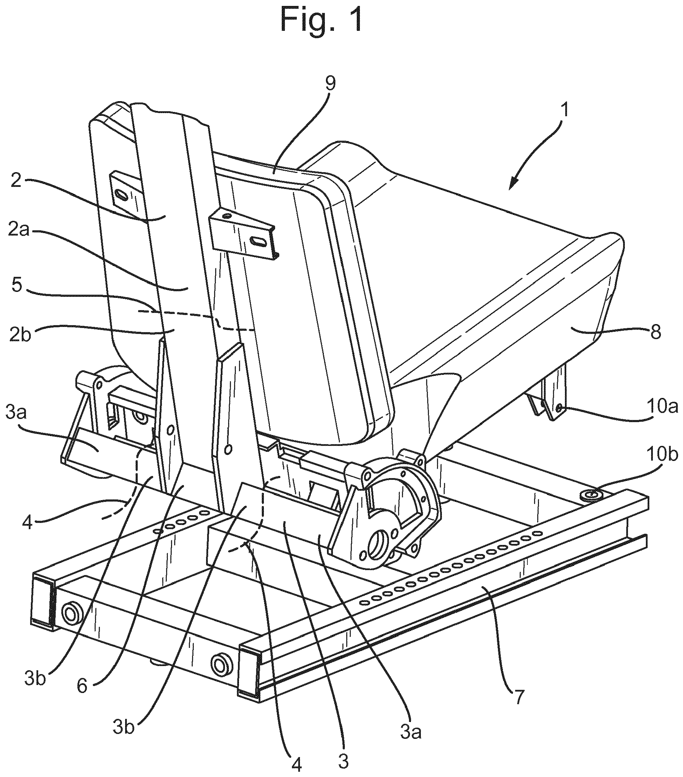

Turning to Figure 1, there is shown a seat system 1, comprising a base element 8 which has a cushion for an occupant. The base element 8 is welded to the back element 9, at a welded joint 6. The seat as shown, in use, is slidably engaged with the floor pan 7. The seat 1 is rigidly attached by bracket 10a on the base element 8 to a mount point 10b on the floor pan 7. In an emergency the seat 1 cannot be removed from the floor pan 7.

The indicated cut lines 4 on the on the support 3, will give rise to a first support 3a which remains connected to the base 3 and second support 3b which remains connected to the back element 9 on the back support 2.

In an alternative arrangement The indicated cut line 5 on the back support 2, would provide a third support element 2b which remains attached to the base element 8, ie via the weld joint 6, and the fourth support element 2b, which remains attached to the back element 9.

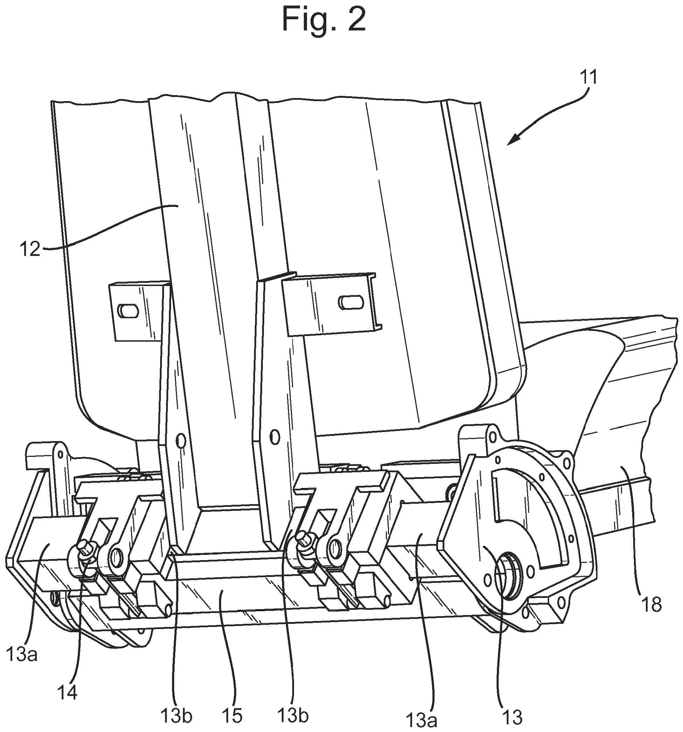

Turning to figure 2 there is shown a seat 11, with a quick release clamp 15, which clamps first supports 13a to second supports 13b. The first supports 13a form a part of a structural support 13, which is part of the base element 18.

The second supports 13b form part of the back element 12, such that when the quick release clamp is removed, the back element 12 may be removed in its entirety, to allow facile removal of an occupant (not shown) in the seat 11.

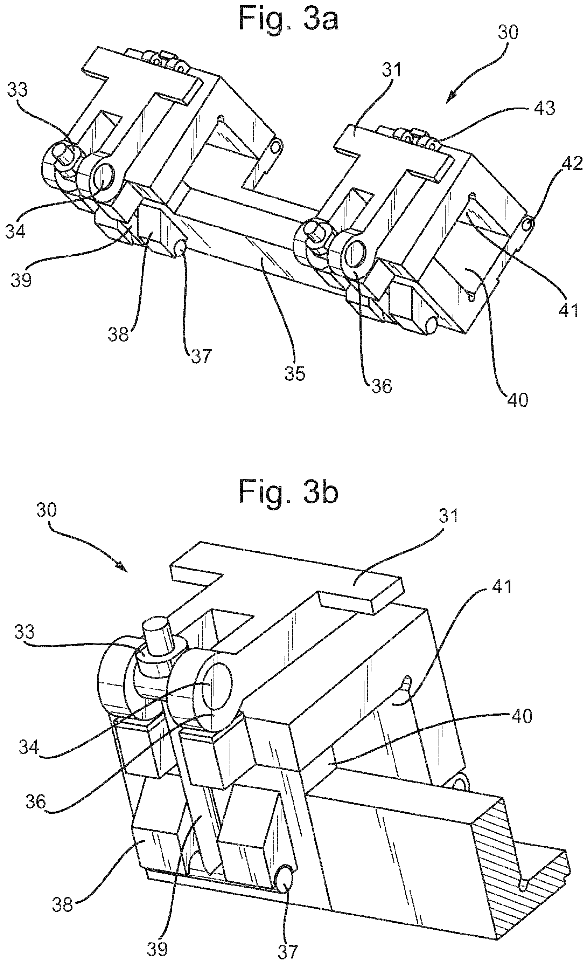

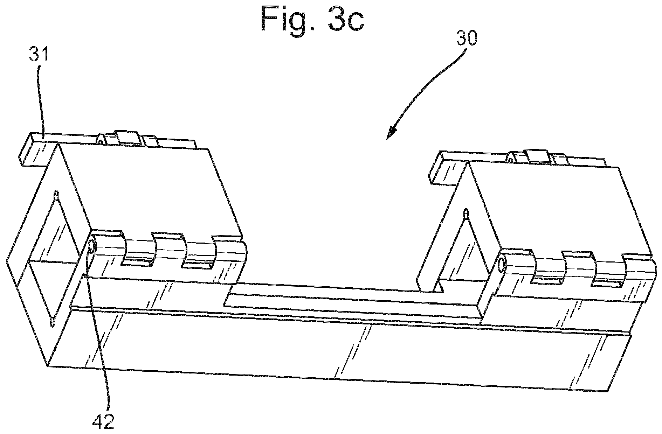

Turning to figures 3a-c, shows a dual quick release mechanical clamp 30, the clamps being linked by an elongate support 35. The quick release mechanical clamp 30 , comprises at least two clamping surfaces 40, 41 suitable for engagement with structural members(not shown). The clamping surfaces 40 and 41 are connected by a hinge member 42. A clamp bar 39 has a generally T-shaped profile and protrusions 37 engage with a recess 38 on the outer surface of the first clamping surface 40.

A release lever 31 impinges upon the outer surface of the second clamp surface 41, and the release lever is temporarily secured to at least one second clamping surface typically using a sprung pin (not shown). A tensioner 33, which is in the form of a threaded nut, cooperatively engages with a threaded portion on the clamp bar 39, so as to apply tension to the clamp bar to secure the at least two clamping surfaces 40 and 41, such that they secure fasten to the structural members(figure 2).

The clamp bar 39 comprises a trunion 34, to which is pivotally connected the release lever 31. The release lever comprises a cam outer surface 36, such that in the first position as shown tightening of the tensioner 33 pulls the first clamping surface 40 and second clamping surfaces 41 together. Upon removal of the sprung pin the release lever is moved away from the clamp surface by rotating about the trunion 34, to a second position (not shown), which moved the cam to a lower position and removes the tension in the clamp bar 39, thereby allowing the first clamping surface 40 and second clamping surfaces 41 to be removed from the structural members (figure 2)

## Claims

1. A quick release seat system suitable for a vehicle, comprising a base element operably attached to a floor pan, said floor pan being rigidly affixed to the vehicle, a back element for supporting an occupant, wherein said base element and back element are rigidly clamped by at least one quick release mechanical clamp, such as to allow removal of said back element from the base element during an evacuation of the vehicle.

2. A seat system according to claim 1, wherein said base element comprises a first structural member, and said back element comprises a second structural member, wherein said quick release mechanical clamp releasably clamps said first structural member and said second structural member.

3. A seat system according to claim 2, wherein the base element comprises at least two first structural members and the back element comprises at least two second structural members, wherein said at least two first structural members are each rigidly affixed to the base element, and said at least two second structural members are rigidly affixed to said back element, wherein at least two quick release mechanical clamps releasably clamps said at least two first structural members and said at least two second structural members.

4. A system according to claim 3, wherein the at least two quick release mechanical clamps are rigidly connected by an elongate support.

5. A seat system according to claim 1, wherein the back element comprises a third structural member, wherein said third structural member is mounted to the back element, and a fourth structural member, wherein said fourth structural member is mounted to said seat element, wherein said quick release mechanical clamp releasably affixes said third structural member and said fourth structural member.

6. A system according to any one of the preceding claims wherein the quick release mechanical clamp, comprises at least two clamping surfaces suitable for providing a releasable clamping engagement with said first and second structural members, a hinge member interconnecting said clamping surfaces, a clamp bar engaged with at least one first clamping surface and a release lever, wherein said release lever is releasably secured to at least one second clamping surface, a tensioner configured to apply tension to allow the clamp bar to releasably secure the at least two clamping surfaces on the first and second members.

7. A system according to claim 6, wherein the release lever is pivotally attached to the clamp bar, wherein said release lever comprises a cam arrangement, such that rotation of the release lever about the clamp bar moves from a first tensioned position which provides a releasable clamping engagement to a second reduced tension position, which allows quick release from the releasable clamp arrangement of said at least two clamping surfaces.

8. A system according to any one of the preceding claims, wherein the quick release mechanical clamp and said first and/or second structural members comprise one or more co-operative voids and lugs.

9. A system according to any one of the preceding claims, wherein said release lever is temporarily secured to at least one second clamping surface by a retaining pin.

10. A method of converting a conventional rigid seat system in an armoured land vehicle, to a quick release seat system, wherein said rigid seat systems comprises
a base element operably attached to a floor pan, said floor pan being rigidly affixed to the vehicle, a back element for supporting an occupant, wherein said base element and back element are rigidly affixed by at least one quick release mechanical clamp, as defined in anyone of the preceding claims;
comprising the steps of
i) cutting the conventional rigid seat system at at least one location, to provide a severed seat system, to allow the removal of the back element from the base element
ii) re-attaching said severed seat system with the at least one quick release mechanical clamp.

11. A method according to claim 10, wherein the quick release mechanical clamp, comprises at least two clamping surfaces suitable for providing a releasable clamping engagement with said first and second structural members, a hinge member interconnecting said clamping surfaces, a clamp bar engaged with at least one first clamping surface and a release lever, wherein said release lever is releasably secured to at least one second clamping surface, a tensioner configured to apply tension to allow the clamp bar to releasably secure the at least two clamping surfaces on the first and second members.

12. A method of removing an occupant to be extracted from an armoured land vehicle comprising a quick release seat system as defined in any one of claims 1 to 9, comprising the steps of:
operating the quick release seat system suitable for a vehicle, as claimed in any one of the preceding claims,
removing the occupant from an access point of the armoured land vehicle.

13. A quick release mechanical clamp, which comprises at least two clamping surfaces suitable for providing a releasable clamping engagement with said first and second structural members, a hinge member interconnecting a first clamping surface and a second clamping surface, a clamp bar engaged with said first clamping surface and said second clamping surface, a release lever, wherein said release lever is releasably secured to a second clamping surface, a tensioner configured to apply tension to allow the clamp bar to releasably secure the first clamping surface and second clamping surface on the first and second members.

14. A clamp according to claim 13, wherein the release lever is pivotally attached to the clamp bar, wherein said release lever comprises a cam arrangement, such that rotation of the release lever about the clamp bar moves from a first tensioned position which provides a releasable clamping engagement to a second reduced tension position, which allows quick release of the clamp bar from the engagement between said at least two clamping surfaces.
